# EUROPÄISCHE PATENTSCHRIFT

(11) **EP 1 464 150 B1**
(45) Veröffentlichungstag und Bekanntmachung des Hinweises auf die Patenterteilung: **11.01.2006**
(21) Anmeldenummer: 01974174.3
(22) Anmeldetag: 13.08.2001
(51) Int. Cl.: H04L 29/06

(54) **VERFAHREN, DATENTRÄGER, COMPUTERSYSTEM UND COMPUTERPROGRAMMPRODUKT ZUR ERKENNUNG UND ABWEHR VON ANGRIFFEN AUF SERVERSYSTEME VON NETZWERK-DIENSTEANBIETERN UND -BETREIBERN**
METHOD, DATA CARRIER, COMPUTER SYSTEM AND COMPUTER PROGRAMME FOR THE IDENTIFICATION AND DEFENCE OF ATTACKS ON SERVER SYSTEMS OF NETWORK SERVICE PROVIDERS AND OPERATORS
PROCEDE, SUPPORT DE DONNEES, SYSTEME INFORMATIQUE ET PRODUIT PROGRAMME PERMETTANT D'IDENTIFIER DES ATTAQUES DIRIGEES CONTRE DES SYSTEMES SERVEURS DE PRESTATAIRES ET D'UTILISATEURS DE SERVICES RESEAU ET DE S'EN PROTEGER

(43) Veröffentlichungstag der Anmeldung: 06.10.2004
(73) Patentinhaber: IP-Online GmbH, 68165 Mannheim (DE)
(72) Erfinder: GEIS, Christoph, 64653 Lorsch (DE); PAUSCH, Eberhard, 35435 Wettenberg (DE); SOYSAL, Thomas, 69190 Walldorf (DE); SCHIEMANN, Ralf, 69242 Mühlhausen (DE)
(74) Vertreter: Aue, Hans-Peter
(86) Internationale Anmeldenummer: PCT/EP2001/009328
(87) Internationale Veröffentlichungsnummer: WO 2003/017613

(56) Entgegenhaltungen:
- WO-A-99/48303
- HUNT R: "Internet/Intranet firewall security-policy, architecture and transaction services" COMPUTER COMMUNICATIONS, BUTTERWORTHS & CO. PUBLISHERS LTD, GB, Bd. 21, Nr. 13, 1. September 1998 (1998-09-01), Seiten 1107-1123, XP004146571 ISSN: 0140-3664

## Beschreibung

Die Erfindung bezieht sich auf ein Verfahren zur Erkennung und Abwehr von Angriffen auf Serversysteme von Netzwerk-Diensteanbietern und -betreibern mittels eines in ein Computer-Netzwerk einzubindenden elektronischen Gerätes, dass ein Computerprogramm aufweist, sowie einen Datenträger, der ein Computerprogramm zur Durchführung dieses Verfahrens enthält. Weiterhin bezieht sich die Erfindung auf ein Computersystem, dass mit einem Netzwerk, wie Internet, Intranet und dergleichen, verbunden ist, aufweisend einen oder mehrere Computer, die als Server-Computer oder als Client-Computer konfiguriert sind, sowie auf ein Computerprogrammprodukt, aufweisend Computerproramm-Codes zur Erkennung und Abwehr von Angriffen auf Serversysteme von Netzwerk-Diensteanbietern und -betreibern mittels eines in ein Computer-Netzwerk einzubindenden elektronischen Gerätes, dass dieses Computerprogrammprodukt enthält.

Die weltweite Vernetzung nimmt starkem Tempo zu. Eine immer größer werdende Anzahl von Unternehmen setzt verstärkt auf die scheinbar unbegrenzten Möglichkeiten im Bereich Online-Marketing und eBusiness. Mit den Möglichkeiten wachsen aber auch die Gefahren, dass die Server bekannter Firmen Institutionen durch Angriffe aus dem Internet blockiert werden.

Das Internet gewinnt als elektronischer Marktplatz im Rahmen der E-Commerce-Aktivitäten vieler Unternehmen immer mehr an Bedeutung. Gleichwohl wächst aber auch die Bedrohung der Unternehmensnetze durch DoS- und DDoS-Attacken (Denial of Service und Distributed Denial of Service = Verhindern eines Zugriffes oder Nutzens eines Computers bzw. des darauf befindlichen Serviceprozesses) überproportional an. Oft entstehen hierbei beträchtliche finanzielle Schäden, die relativ leicht, auch ohne ein tatsächliches Eindringen von Hackern in die gesicherte Systemumgebung eines Unternehmens, nur durch das erfolgreiche Verhindern der Online-Geschäfte (E-Commerce/E-Business) entstehen können. Viele Versuche dieses Problem zu bewältigen blieben, gemessen an ihren Erfolgen, weit hinter den Erwartungen zurück. Einer der ist, dass es bisher kein wirkliches Detektionssystem für diese Art von Attacken gegeben hat, welches im Prinzip die einzige Möglichkeit zur Abwehr in einer von Attacken betroffenen Systemumgebung darstellt. Ein anderes Problem liegt in der Beschaffenheit des Internets und der damit nahezu aussichtslosen Situation, die Verursachung solcher Attacken nur dann verhindern zu können, wenn uneingeschränkt alle der weltweit existierenden Netzwerkprovider einheitliche Maßnahmen zur Unterbindung solcher Hackerattacken etablieren würden. Dies ist unter anderem der Grund, dass alle auf nationaler Ebene angestrebte Versuche zur Verhinderung von DOS- bzw. DDoS-Attacken bisher leider erfolglos blieben oder nur mäßigen Erfolg hatten.

Das Internet stellt bekanntermaßen ein internationales Geflecht technischer Komponenten dar, z.B. Switches, Router und Übertragungskomponenten mit multipler Wegeführung usw.. Somit ist es für Hacker oft leicht möglich einzelne Server oder auch ganze Netze bzw. Netzwerkbereiche lahmzulegen. Lokale oder nationale Maßnahmen versprechen kaum eine wirksame Verhinderung, da es in dem internationalen Geflecht von Routern, Netz-Providern und den beliebten On-Call-Verbindungen den Hackern relativ leicht möglich ist, einen Weg bzw. eine gangbare Angriffsstrategie für ihre Vorhaben ausfindig zu machen. Selbst wenn bei solchen Angriffen nicht immer direkte Schäden durch Datenverluste oder auch Datenmanipulationen oder unbefugte Datenkopierung entstehen müssen, wirkt sich der Imageverlust entsprechend empfindlich für das betroffene Unternehmen aus.

Programme, mit deren Hilfe solche Attacken ausgeführt werden können, stehen im World Wide Web (WWW) frei zur Verfügung. Sie können von Hackern jederzeit per "Download" abgerufen werden. Die meisten dieser gefürchteten Angriffe nutzen technische Schwächen in den Datenübertragungsprotokollen aus, auf denen die Kommunikation im Internet basiert. Die betroffenen Rechner werden meist mit einer so großen Anzahl von Scheinanfragen belastet, dass ernst gemeinte Anfragen nicht mehr bearbeitet werden können. Somit ist der betroffene Rechner für einen realen Kunden scheinbar nicht mehr aktiv.

Beispielhaft werden einige bekannte Maßnahmen genannt, die DoS- und DDoS-Attacken abwehren bzw. vorbeugen können.

Im lokalen.Umfeld der Netzvermittler und -provider könnten Maßnahmen ergriffen werden, die das Aufsetzen von DoS- und DDoS-Attacken mit der aktiven Verhinderung der Nutzung von gefälschten IP-Adressen erheblich erschweren würden. Viele DoS-Angriffe nutzen nämlich gefälschte IP- Absenderadressen (IP-Spoofing), um die Ermittlung des Verursachers zu verhindern bzw. erheblich zu erschweren. Durch entsprechende technische Regeln in der Netzinfrastruktur der Netzvermittler, können die Netzbetreiber diese Möglichkeit wesentlich einschränken, so dass gefälschte IP-Pakete aus dem eigenen Serviceumfeld nicht weiter ins Internet vermittelt werden. Einer Organisation, die an einen Netzbetreiber angeschlossen ist, steht dabei ein bestimmter IP-Adressbereich zur Verfügung. Jedes IP-Paket, dass aus dieser Organisation in das Internet geschickt wird, müsste eine IP-Absenderadresse aus diesem Bereich haben. Ist dies nicht der Fall, so handelt es sich sehr wahrscheinlich um eine gefälschte Adresse und das IP-Paket sollte vom Netzvermittler nicht weitergeleitet werden, d. h., es soll eine Paketfilterung auf die Absenderadressen beim Einspeisen der Pakete in das Internet durchgeführt werden. Zwar ist IP-Spoofing innerhalb des erlaubten Adressbereichs der Organisation noch immer möglich, jedoch ist der Kreis der möglichen Verursacher auf die Organisation eingeschränkt. Darüber hinaus müsste das Betreiben von so genannten "Anonymous Hosts" weltweit überdacht und wenn möglich eingeschränkt oder auch unterbunden werden. Dies ist jedoch organisatorisch, zeitlich, rechtlich und finanziell extrem aufwändig.

Bislang ist die Widerstandsfähigkeit von Servern gegenüber der in der Praxis angewendeten DoS- und DDoS-Attacken oftmals sehr begrenzt. Einige Systeme können jedoch etwas länger andere Systeme nur sehr kurzzeitig diesen Attacken widerstehen. Länger anhaltende Attacken führen zurzeit jedoch so gut wie immer zum Erfolg.

Herkömmlich verwendete Paketfilterungslösungen helfen gegen DoS- und DDoS-Attacken leider oftmals nicht oder werden selbst so weit in Mitleidenschäft gezogen, dass sie ihre Schutzwirkung, gerade bei anhaltenden Attakken, sehr bald verlieren. Auch zahlreiche Angriffserkennungssysteme stehen weit zurück, da sie bei den DoS- und DDoS-Attacken oftmals nur das hohe Netzverkehrsaufkommen erkennen und Warnungen ausgeben, die dann meistens erst viel zu spät zu Reaktionen führen.

Im Falle eines erfolgreichen Angriffs ist es von zentraler Bedeutung, schnell reagieren zu können. Nur so ist es möglich wirksame Gegenmaßnahmen einzuleiten, eventuell den Angreifer zu identifizieren und den Normalbetrieb innerhalb kurzer Zeit wieder herzustellen. In einem Notfallplan ist daher eine geeignete Eskalationsprozedur festzuschreiben. Notwendige Angaben sind dabei u. a. Ansprechpartner, Verantwortliche, alternative Kommunikationswege, Handlungsanweisungen und Lagerort möglicherweise benötigter Ressourcen und Sicherungsmedien.

Die Server der Serverbetreiber können als Agenten eines DoS-Angriffs missbraucht werden. Der Angreifer installiert dazu unter Ausnutzung bekannter Schwachstellen Schadsoftware. Daher müssen die Betreiber der Server diese sorgfältig und sicher konfigurieren. Nicht benötigte Netzdienste werden deaktiviert und die benötigten abgesichert. Ein hinreichender Passwort- und Zugriffsschutz sowie rechtzeitiges Ändern (insbesondere voreingestellter) Passwörter muss sichergestellt sein.

Viele WWW-Seiten im Internet sind derzeit nur nutzbar, wenn in den Browsern aus Sicherheitssicht bedenkliche Einstellungen vorgenommen werden, die von einem Angreifer missbraucht werden können.

Viele Inhalte-Anbieter stellen im Internet Programme und Dokumente zum Download bereit. Gelingt es einem Angreifer, dort ein trojanisches Pferd einzubringen, so kann er in kurzer Zeit auf eine große Verbreitung hoffen. Eine solche Vorgehensweise ist insbesondere bei DDoS-Angriffen für Angreifer verlockend, da dabei eine große Zahl von Rechnern für einen wirkungsvollen Angriff benötigt wird.

Rechner der Endanwender sind im Normalfall nicht Ziel von DoS-Angriffen. Allerdings können diese Rechner dazu benutzt werden, dass ein Angreifer in einem ersten Schritt Programme auf ihnen installiert, die dann ferngesteuert einen DoS-Angriff auf beliebige Rechner ermöglichen.

Rechner von Endanwendern können als Agenten für Angriffe missbraucht werden. Am leichtesten lassen sich solche Agenten über Viren, trojanische Pferde oder durch aktive Inhalte auf die einzelnen Rechner installieren. Daher ist ein zuverlässiger und aktueller Virenschutz sowie das Abschalten aktiver Inhalte im Browser dringend notwendig. Gegebenenfalls kann auch der Einsatz von Hilfsprogrammen zum Online-Schutz des Clients, beispielsweise PC-Firewalls, erwogen werden. Häufig werden aber auch insbesondere neue Computerviren nicht hinreichend erkannt und beseitigt.

Immer wieder werden neue sicherheitsrelevante Schwachstellen in den Betriebssystemen und der Serversoftware entdeckt, die wenig später durch Updates bzw. Patches der Hersteller behoben werden. Um möglichst zeitnah reagieren zu können, ist es notwendig, Software-Hersteller auf Updates zu überwachen. Die relevanten Updates sind dann schnellstmöglich einzuspielen, um die bekannt gewordenen Schwachstellen zu beheben.

Um einen Rechner vor Risiken und Gefahren zu schützen, ist z. T. erhebliches Know-how zur Erarbeitung einer effektiven IT-Sicherheitskonfiguration notwendig. Administratoren müssen daher ausreichend aus- und weitergebildet werden.

Es ist zwar nicht damit zu rechnen, dass die Maßnahmen zur Verhinderung von IP-Spoofing wirklich zeitnah weltweit und einheitlich von den zahlreichen Netzwerk-Vermittlern und -Providern umgesetzt werden, jedoch kann man mit den zur Abwehr beschriebenen restlichen Maßnahmen bereits einen mehr oder weniger wirksamen Erfolg gegen DoS- und DDoS- Attacken erreichen. Ein befriedigendes Ergebnis lässt sich mit den bekannten Mitteln bisher jedoch nicht erreichen.

HUNT Ray, "Internet/Intranet firewall security-policy, architecture and transaction services", COMPUTER COMMUNICATIONS, BUTTERWORTHS & CO. PUBLISHERS LTD, GB, Bd. 21, Nr. 13, 1. September 1998 /1998-09-01), Seiten 1107-1123, XP004146571 ISSN 0140-3664 gibt einen Überblick von Firewall-Architekturen.

Die WO 99/48303 offenbart ein Verfahren zum Blockieren von unerwünschten Zugriffsattacken auf private Computer-Netzwerke.

Es ist Aufgabe der Erfindung, Mittel zur Erkennung und Abwehr von Angriffen auf Serversysteme von Netzwerk-Diensteanbietern und -betreibern der eingangs genannten Art zu schaffen, mit denen DoS- und DDoS-Attacken gezielt erkannt und abgewehrt werden können, um dadurch ein möglichst hohes Maß an Sicherheit und .Schutz vor DoS- und DDoS-Attacken zu erzielen und den Computer bzw. das Computersystem dauerhaft stabil und leistungsfähig zu erhalten.

Erfindungsgemäß wird die Aufgabe verfahrensmäßig gelöst durch die Bestandteile und Verfahrensschritte
- Schutz vor DoS- und DDoS-Attacken (Flood-Attacken), wobei,
   - jeder IP Syn (IP-Verbindungsaufbauwunsch) registriert und zur Bewahrung im IP-Protokoll festgelegten Zeitbeschränkung mit einem Syn Ack beantwortet wird, während das registrierte Syn-Paket auf Gültigkeit und die im Zielssystem verfügbaren Dienste geprüft wird und
   - der Verbindungsaufbau mit dem Zielsystem initialisiert und das empfangene Datenpaket an das Zielsystem zur weiteren Bearbeitung übergeben wird, wenn die Prüfung erfolgreich abgeschlossen ist und zwischenzeitlich der wiederum von dem von außen anfragenden System auszusendende Ack sowie ein darauf folgendes gültiges Datenpaket empfangen wurde, und
- Link Level Sicherheit, wobei die zu prüfenden Datenpakete direkt von der OSI-Schicht 2 (Link Level) übernommen wird, und
- Untersuchung gültiger IP-Header, wobei der Aufbau jedes IP-Paketes vor dessen Weiterleitung auf das Zielsystem auf Gültigkeit überprüft und jedes ungültige IP-Paket verworfen wird, und
- Untersuchung des IP-Paketes durch Überprüfung insbesondere der Länge und der Prüfsumme des IP-Paketes auf Übereinstimmung der Angaben im TCP- oder IP-Header mit dem Aufbau des IP-Paketes, und
- TCP/IP Fingerprint-Schutz, wobei der als Antwort ausgehende Datenverkehr von den geschützten Systemen zu den von außen anfragenden Systemen neutralisiert wird, indem musterhafte Protokoll-Identifizierer verwendet werden, und
- Sperrung aller UDP-Netzwerkpakete zur Verhinderung von Angriffen auf die geschützten Systeme über das Netzwerkprotokoll UDP (User Data Protokoll), indem über UDP erreichbare benötigte Dienste gezielt registriert und freigegeben werden, wobei Nachrichten explizit für diese UDP-Ports zugelassen werden, die übrigen Ports jedoch geschlossen bleiben, und
- Längenbeschränkungen von ICMP-Paketen (Internet Control Message), wobei ICMP_Nachrichten nur in einer vorgegebenen Maximallänge als gültige Datenpakete erkannt und hiervon abweichende ICMP-Pakete verworfen werden, und
- Ausschließen bestimmter externer IP-Adressen von der Kommunikation mit dem Zielsystem, und
- Paket-Level-Firewall-Funktion, wobei ein- und ausgehende IP-Pakete mittels frei definierbarer Regeln untersucht und auf Grund dieser Regeln abgelehnt oder an das Zielsystem weitergeleitet werden, und
- Schutz von erreichbaren Diensten des Zielsystems durch Ausschluss bestimmter Dienste und Benutzer und Umlenkung von Diensteanfragen auf andere Server.

Erfindungsgemäß wird die Aufgabe auch durch einen Datenträger, enthaltend ein Computerprogramm zur Erkennung und Abwehr von Angriffen auf Serversysteme von Netzwerk-Diensteanbietern und -betreibern zum Einsatz in einem in ein Computer-Netzwerk einzubindenden elektronischen Gerät, gelöst, der die Programmschritte aufweist
- Schutz vor DoS- und DDoS-Attacken (Flood-Attacken), wobei,
   - jeder IP Syn (IP-Verbindungsaufbauwunsch) registriert und zur Bewahrung im IP-Protokoll festgelegten Zeitbeschränkung mit einem Syn Ack beantwortet wird, während das registrierte Syn-Paket auf Gültigkeit und die im Zielssystem verfügbaren Dienste geprüft wird und
   - der Verbindungsaufbau mit dem Zielsystem initialisiert und das empfangene Datenpaket an das Zielsystem zur weiteren Bearbeitung übergeben wird, wenn die Prüfung erfolgreich abgeschlossen ist und zwischenzeitlich der wiederum von dem von außen anfragenden System auszusendende Ack sowie ein darauf folgendes gültiges Datenpaket empfangen wurde, und
- Link Level Sicherheit, wobei die zu prüfenden Datenpakete direkt von der OSI-Schicht 2 (Link Level) übernommen wird, und
- Untersuchung gültiger IP-Header, wobei der Aufbau jedes IP-Paketes vor dessen Weiterleitung auf das Zielsystem auf Gültigkeit überprüft und jedes ungültige IP-Paket verworfen wird, und
- Untersuchung des IP-Paketes durch Überprüfung insbesondere der Länge und der Prüfsumme des IP-Paketes auf Übereinstimmung der Angaben im TCP- oder IP-Header mit dem Aufbau des IP-Paketes, und
- TCP/IP Fingerprint-Schutz, wobei der als Antwort ausgehende Datenverkehr von den geschützten Systemen zu den von außen anfragenden Systemen neutralisiert wird, indem musterhafte Protokoll-Identifizierer verwendet werden, und
- Sperrung aller ,UDP-Netzwerkpakete zur Verhinderung von Angriffen auf die geschützten Systeme über das Netzwerkprotokoll UDP, indem über UDP erreichbare benötigte Dienste gezielt registriert und freigegeben werden, wobei Nachrichten explizit für diese UDP-Ports zugelassen werden, die übrigen Ports jedoch geschlossen bleiben, und
- Längenbeschränkungen von ICMP-Paketen, wobei ICMP_Nachrichten nur in einer vorgegebenen Maximallänge als gültige Datenpakete erkannt und hiervon abweichende ICMP-Pakete verworfen werden, und
- Ausschließen bestimmter externer IP-Adressen von der Kommunikation mit dem Zielsystem, und
- Paket-Level-Firewall-Funktion, wobei ein- und ausgehende IP-Pakete mittels frei definierbarer Regeln untersucht und auf Grund dieser Regeln abgelehnt oder an das Zielsystem weitergeleitet werden, und
- Schutz von erreichbaren Diensten des Zielsystems durch Ausschluss bestimmter Dienste und Benutzer und Umlenkung von Diensteanfragen auf andere Server.

Bevorzugt ist der Datenträger als EPROM ausgebildet und ist Bestandteil eines elektronischen Gerätes. Dieses elektronische Gerät kann ein Einschubgerät zum Einsetzen in einen Computer oder auch eine separate Gerätebox sein.

Alternativ wird die Aufgabe auch durch ein Computersystem gelöst, dass mit einem Netzwerk, wie Internet, Intranet und dergleichen, verbunden ist, aufweisend einen oder mehrere Computer, die als Server-Computer oder als Client-Computer konfiguriert sind. Dabei ist in eine zu schützende Datenleitung zwischen das Netzwerk und den Server- oder Client-Computer ein elektronisches Gerät geschaltet ist, welches mit einem Datenträger versehen ist, der ein Computerprogramm aufweist, das die Programmschritte enthält:
- Schutz vor DoS- und DDoS-Attacken (Flood-Attacken), wobei,
   - jeder IP Syn (IP-Verbindungsaufbauwunsch) registriert und zur Bewahrung im IP-Protokoll festgelegten Zeitbeschränkung mit einem Syn Ack beantwortet wird, während das registrierte Syn-Paket auf Gültigkeit und die im Zielssystem verfügbaren Dienste geprüft wird und
   - der Verbindungsaufbau mit dem Zielsystem initialisiert und das empfangene Datenpaket an das Zielsystem zur weiteren Bearbeitung übergeben wird, wenn die Prüfung erfolgreich abgeschlossen ist und zwischenzeitlich der wiederum von dem von außen anfragenden System auszusendende Ack sowie ein darauf folgendes gültiges Datenpaket empfangen wurde, und
- Link Level Sicherheit, wobei die zu prüfenden Datenpakete direkt von der OSI-Schicht 2 (Link Level) übernommen wird, und
- Untersuchung gültiger IP-Header, wobei der Aufbau jedes IP-Paketes vor dessen Weiterleitung auf das Zielsystem auf Gültigkeit überprüft und jedes ungültige IP-Paket verworfen wird, und
- Untersuchung des IP-Paketes durch Überprüfung insbesondere der Länge und der Prüfsumme des IP-Paketes auf Übereinstimmung der Angaben im TCP- oder IP-Header mit dem Aufbau des IP-Paketes, und
- TCP/IP Fingerprint-Schutz, wobei der als Antwort ausgehende Datenverkehr von den geschützten Systemen zu den von außen anfragenden Systemen neutralisiert wird, indem musterhafte Protokoll-Identifizierer verwendet werden, und
- Sperrung aller UDP-Netzwerkpakete zur Verhinderung von Angriffen auf die geschützten Systeme über das Netzwerkprotokoll UDP, indem über UDP erreichbare benötigte Dienste gezielt registriert und freigegeben werden, wobei Nachrichten explizit für diese UDP-Ports zugelassen werden, die übrigen Ports jedoch geschlossen bleiben, und
- Längenbeschränkungen von ICMP-Paketen, wobei ICMP_Nachrichten nur in einer vorgegebenen Maximallänge als gültige Datenpakete erkannt und hiervon abweichende ICMP-Pakete verworfen werden, und
- Ausschließen bestimmter externer IP-Adressen von der Kommunikation mit dem Zielsystem, und
- Paket-Level-Firewall-Funktion, wobei ein- und ausgehende IP-Pakete mittels frei definierbarer Regeln untersucht und auf Grund dieser Regeln abgelehnt oder an das Zielsystem weitergeleitet werden, und
- Schutz von erreichbaren Diensten des Zielsystems durch Ausschluss bestimmter Dienste und Benutzer und Umlenkung von Diensteanfragen auf andere Server.

Des Weiteren erfolgt die Lösung der Aufgabe erfindungsgemäß durch ein Computerprogrammprodukt, aufweisend Computerproramm-Codes zur Erkennung und Abwehr von Angriffen auf Serversysteme von Netzwerk-Diensteanbietern und -betreibern mittels eines in ein Computer-Netzwerk einzubindenden elektronischen Gerätes, dass dieses Computerprogrammprodukt enthält. Das Computerprogrammprodukt umfasst die Programmschritte
- Schutz vor DoS- und DDoS-Attacken (Flood-Attacken), wobei,
   - jeder IP Syn (IP-Verbindungsaufbauwunsch durch zum Schein aufgebaute TCP/IP-Verbindungen) registriert und zur Bewahrung im IP-Protokoll festgelegten Zeitbeschränkung mit einem Syn Ack beantwortet wird, während das registrierte Syn-Paket auf Gültigkeit und die im Zielssystem verfügbaren Dienste geprüft wird und
   - der Verbindungsaufbau mit dem Zielsystem initialisiert und das empfangene Datenpaket an das Zielsystem zur weiteren Bearbeitung übergeben wird, wenn die Prüfung erfolgreich abgeschlossen ist und zwischenzeitlich der wiederum von dem von außen anfragenden System auszusendende Ack sowie ein darauf folgendes gültiges Datenpaket empfangen wurde, und
- Link Level Sicherheit, wobei die zu prüfenden Datenpakete direkt von der OSI-Schicht 2 (Link Level) übernommen wird, und
- Untersuchung gültiger IP-Header, wobei der Aufbau jedes IP-Paketes vor dessen Weiterleitung auf das Zielsystem auf Gültigkeit überprüft und jedes ungültige IP-Paket verworfen wird, und
- Untersuchung des IP-Paketes durch Überprüfung insbesondere der Länge und der Prüfsumme des IP-Paketes auf Übereinstimmung der Angaben im TCP- oder IP-Header mit dem Aufbau des IP-Paketes, und
- TCP/IP Fingerprint-Schutz, wobei der als Antwort ausgehende Datenverkehr von den geschützten Systemen zu den von außen anfragenden Systemen neutralisiert wird, indem musterhafte Protokoll-Identifizierer verwendet werden, und
- Sperrung aller UDP-Netzwerkpakete zur Verhinderung von Angriffen auf die geschützten Systeme über das Netzwerkprotokoll UDP, indem über UDP erreichbare benötigte Dienste gezielt registriert und freigegeben werden, wobei Nachrichten explizit für diese UDP-Ports zugelassen werden, die übrigen Ports jedoch geschlossen bleiben, und
- Längenbeschränkungen von ICMP-Paketen, wobei ICMP_Nachrichten nur in einer vorgegebenen Maximallänge als gültige Datenpakete erkannt und hiervon abweichende ICMP-Pakete verworfen werden, und
- Ausschließen bestimmter externer IP-Adressen von der Kommunikation mit dem Zielsystem, und
- Paket-Level-Firewall-Funktion, wobei ein- und ausgehende IP-Pakete mittels frei definierbarer Regeln untersucht und auf Grund dieser Regeln abgelehnt oder an das Zielsystem weitergeleitet werden, und
- Schutz von erreichbaren Diensten des Zielsystems durch Ausschluss bestimmter Dienste und Benutzer und Umlenkung von Diensteanfragen auf andere Server.

Ein besonderer Vorteil der erfindungsgemäßen Lösung besteht darin, dass nicht nur alle geschützten Systeme vor Angriffsversuchen mittels DoS- und DDoS-Attacken abgesichert werden, sondern auch das Computerprogramm zur Durchführung des Verfahrens zur Erkennung und Abwehr von Angriffen auf Serversysteme von Netzwerk-Diensteanbietern und -betreibern selbst abgesichert ist.

Der Schutz vor DoS- und DDoS-Attacken bildet den Kern des erfindungsgemäßen Verfahrens. Diese Attacken haben zum Ziel, den oder die Zielcomputer durch eine Flut von Verbindungsaufbau-Paketen zum Erliegen, d.h. zum Abstürzen zu bringen. Die angegriffenen Systeme sind anschließend nicht mehr in der Lage, auf Kommunikationsanforderungen zu reagieren. Durch ein intelligentes Regelwerk werden nun alle geschützten Systeme vor Angriffsversuchen mittels DoS- und DDoS-Attacken abgesichert. Dabei wird eine besondere Behandlung der eingehenden Netzwerkpakete sichergestellt, indem nur die legitimen Anforderungen die geschützte Datenleitung passieren können und die Zielsysteme, wie beispielsweise WorldWideWeb- (WWW) oder Email-Server, nicht durch Massenangriffe zum Erliegen kommen.

Da im Link-Level-Sicherheits-Modul die zu prüfenden Datenpakete direkt von der OSI-Schicht 2 übernommen wird, ist eine eigene IP-Adresse nicht notwendig. Somit ist es auch nicht erforderlich, aufwändige Umkonfigurationen der bestehenden Netzwerkumgebung bezüglich der logischen Adressierung (IP-Routing) durchzuführen. Damit bildet die damit dem Verfahren betriebene Hardware keine adressierbare Netzkomponente, so dass weder ein gezielter Angriff aus dem Netzwerk noch ein Ausspähen möglich ist.

Viele TCP/IP-Implementierungen reagieren mit einem Fehlverhalten, wenn der Header eines IP-Paketes einen ungültigen Aufbau besitzt. Wenn der Aufbau jedes IP-Paketes vor dessen Weiterleitung auf das Zielsystem auf Gültigkeit überprüft wird, wird sichergestellt, dass nur IP-Pakete mit korrektem Aufbau an die Zielsysteme gelangen.

Um Angriffe auf Computersysteme erfolgreich durchführen zu können, ist das Wissen um das darauf laufende Betriebssystem wichtig, denn gezielte Angriffe auf Serversysteme basieren auf der Kenntnis um das zu Grunde liegende Betriebssystem des Zielrechners. TCP/IP FingerPrint-Routinen untersuchen das Verhalten der TCP/IP-Implementierungen des Zielsystems und können daraus das Betriebssystem ableiten. Die Erfindung stellt mit ihrer Funktionalität sicher, dass der Angreifer durch Analyse der Antwortpakete keine Rückschlüsse auf das verwendete Betriebssystem erhält. Ein IP-Fingerprint ist dadurch nicht mehr möglich.

Um Computer in einem TCP/IP-Netzwerk anzugreifen, werden unterschiedliche Methoden verwendet. Eine Möglichkeit hierzu ist das Versenden von ICMP-Nachrichten mit einer unverhältnismäßig hohen Paketlänge. Um diese Problem proaktiv zu bekämpfen, wirkt die in die Erfindung implementierte Funktion der Längenbeschränkung von ICMP-Paktene auch hierfür.

Die Möglichkeit, bestimmte externe IP-Adressen von der Kommunikation auszuschließen, erhöht die Gesamtsicherheit der eigenen Systeme. Wird beispielsweise erkannt, dass von einem Rechner aus dem Internet untersucht wird, welche Ports auf dem eigenen System offen und damit angreifbar sind, kann.angewiesen werden, alle Pakete von diesem Computer zu verwerfen. Die Liste der ausgeschlossenen Rechner (Blacklist) kann später modifiziert werden, so dass alte Einträge wieder gelöscht werden können.

Zusätzlich zur Paket-Level-Firewall-Funktion auf IP-Paket-Ebene wird die Erfindung um Schutzmechanismen in Bezug auf die erreichbaren Dienste erweitert, die über die IP-Protokolle HTTP, FTP, NNTP, POP, IMAP, SMTP, X, LDAP, LPR, Socks oder SSL erreichbar sind. Der Ausschluss bestimmter Dienste bzw. Benutzer oder die Umlenkung von Diensteanfragen auf andere Server wird mit dieser Funktionalität gewährleistet. Eine einfache Konfiguration dieser Komponente wird über eine Administrationsoberfläche ermöglicht, über die solche Einschränkungen festgelegt werden können.

Mit dem erfindungsgemäßen Verfahren, der Software und dem das Computerprogramm enthaltenden elektronischen Gerät werden alle ein- und ausgehenden Nachrichten überwacht. Bei Erkennen einer Attacke greift die erfindungsgemäße Lösung gezielt ein und blockiert selektiv die verdächtigen Datenpakete ohne dadurch den normalen Datenverkehr zu beeinträchtigen. Alle regulären Daten werden nahezu verzögerungsfrei weitergeleitet, so dass der Einsatz der erfindungsgemäßen Lösung im Normalfall für den Anwender keinerlei Arbeits- bzw. Kommunikationsbeeinträchtigung impliziert. Dies gilt auch dann, wenn die Anschlüsse an das Internetserverseitig mit hoher Geschwindigkeit (und hohem Datenaufkommen) betrieben werden (100 Mbit/s).

Weitere Maßnahmen und Ausgestaltungen des erfindungsgemäßen Verfahrens ergeben sich aus den Unteransprüchen 2 bis 6.

Nach einer Ausgestaltung des erfindungsgemäßen Verfahrens wird bei der Längenbeschränkung von ICMP-Paketen die ungültige Länge des ICMP-Paketes auf eine zulässige Länge reduziert. Dabei können neben der Längenbeschränkung von ICMP-Paketen die einzelnen ICPM-Nachrichtentypen auch vollständig gesperrt werden.

Nach einer weiteren Ausgestaltung der Paket-Level-Firewall-Funktion werden die Regeln hierfür auf der Basis bestimmter Kriterien eines IP-Paketes insbesondere in Bezug auf Ausschlüsse, Einschränkungen und Log-Ausgaben festgelegt. Das Administrationsprogramm erstellt anschließend eine Konfigurationsdatei für die Firewall.

Bei einer vorteilhaften Ausgestaltung der Erfindung erfolgen zur kontrollierten Konfiguration und Sicherstellung der uneingeschränkten Funktion des Verfahrens administrative Eingriffe nur von einer Konsole oder über gesicherte Netzwerk-Verbindungswege.

Des Weiteren kann der Zugriff auf das Zielsystem über frei einstellbare Zeitfenster detailliert eingeschränkt werden.

Die Gesamtheit der Erfindung ist somit eine speziell konfigurierte bzw. konfektionierte Hardware auf Personal-Computer-Basis, die adaptiv mit Microchips (EPROMs) mit speziell entwickelten Microcode ausgestattet ist. Hinzu kommt ein speziell entwickeltes interdisziplinäres, jedoch system- und leitungsschichtnahes Verfahren bzw. Computerprogramm, das in Form eines Systemprogrammes auf die verscheiden ausgerichteten Probleme differenziert reagiert. Es besteht nun die Möglichkeit, den Datenstrom bereits aus dem Leitungsprotokoll (OSI Schicht 2) zu entnehmen und auf sicherheitsrelevante Inhalte der darüber liegenden Schichten (OSI Schicht 3 - OSI Schicht 7) hin zu untersuchen. Eine der wesentlichen Eigenschaften der Erfindung ist damit, die funktionelle Erweiterung der eigentlich passiven Datenleitung um die aktive Intelligenz zur Überprüfung des Datenstromes auf angriffsrelevante Inhalte. Da jedoch mit den enthaltenen Prüfroutinen, im Gegensatz zu allen anderen auf dem Markt befindlichen Sicherheitskomponenten auch nachweislich "Flood-Attacks" sowie Angriffe auf IP-Stack- und Betriebssystemebene der mit dem Verfahren geschützten Rechner erkannt und verhindert werden können, sind über den Ansatz der Einbindungsweise hinaus auch noch weitere Alleinstellungsmerkmale implementiert. Die kombinierte erfindungsgemäße Hard- und Software schützt sich und die dahinter geschalteten Systeme im internen Netzwerk aktiv. Die kombinierte Lösung wird in die jeweilige Zugangsleitung zwischen dem Screening-Router und den zu schützenden Systemen, mitunter noch vor der eigentlichen Firewall und damit auch vor der DMZ (Demillitarisierte Zone), eingeschleift. Mittels der unterschiedlichen Methoden, die auf Grund der Modularität der Erfindung gesamtheitlich oder eingeschränkt zum Einsatz kommen, werden angriffsrelevante Inhalte einschließlich Internet Protokoll -Aufwärts erkannt und abgewehrt. Die Daten werden unabhängig von der im IP-Header eingetragenen Zieladresse aufgenommen und in einer als "neutrale Instanz" zu beschreibenden Verfahrensweise auf angriffsrelevante Inhalte hin untersucht. Als Besonderheit muss deshalb auch angesehen werden, dass das Schutzsystem selbst nicht auf IP-Ebene angegriffen werden kann, da dieses System im eigentlichen Sinne keine über das IP-Protokoll adressierbare Komponente darstellt und sich damit für aktive Netzwerkkomponenten als völlig unsichtbar darstellt.

Ein wesentliches Element der Erfindung stellt die aktive Detektion von DoS- und dDoS-Attacken dar, welche durch die erfindungsgemäße kombinierte Hard- und Software-Lösung möglich geworden ist. Allein auf der Seite der Serverbetreiber eingesetzt, kann durch die Erfindung ein aktiver Schutz der Serversysteme erreicht werden. In Verbindung mit dem Einsatz auf der Seite der Netzwerk-Provider, kann die durch DoS- und DDoS-Attacken drohende Überlastung der Leitung aktiv verhindert werden. Wichtig ist aber auch, dass das DoS-Detektionssystem nicht die herkömmlich etablierten Firewalls ersetzt, sondern lediglich um wichtige Bestandteile ergänzt.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Der der Erfindung zu Grunde liegende Gedanke wird in der nachfolgenden Beschreibung anhand von Ausführungsbeispielen, die in den Zeichnungen dargestellt sind, näher beschrieben. Es zeigen:
- Fig. 1: eine schematische Darstellung eines erfindungsgemäßen Computersystems, das mit dem Internet verbunden ist, in einem kleinen Netzwerkumfeld;
- Fig. 2: eine schematische Darstellung eines erfindungsgemäßen Computersystems, das mit dem Internet verbunden ist, in einem mittelgroßen Netzwerkumfeld;
- Fig. 3: eine schematische Darstellung eines erfindungsgemäßen Computersystems, das mit dem Internet verbunden ist, in einem großen Netzwerkumfeld;
- Fig. 4: eine schematische Darstellung der erfindungsgemäßen Verfahrensweise beim Verbindungsaufbau und zulässigem Protokollgebrauch;
- Fig. 5: eine schematische Darstellung der erfindungsgemäßen Verfahrensweise beim Verbindungsaufbau und unzulässigem Protokollgebrauch;
- Fig. 6: eine schematische Darstellung der erfindungsgemäßen Verfahrensweise beim unvollständigen Verbindungsaufbau;
- Fig. 7: eine schematische Darstellung der erfindungsgemäßen Verfahrensweise nach dem Verbindungsaufbau bei zulässigem Datenverkehr;
- Fig. 8: eine schematische Darstellung der erfindungsgemäßen Verfahrensweise nach dem Verbindungsaufbau bei unzulässigem Datenverkehr;
- Fig. 9: eine schematische Darstellung der durch ein elektronisches Gerät geschützten Protokollebenen;
- Fig. 10: eine Darstellung der Untersuchung gültiger IP-Header;
- Fig. 11: eine Darstellung der Untersuchung eines IP-Pakets;
- Fig. 12: eine Darstellung der Untersuchung von einstellbaren UDP-Verbindungen und
- Fig. 13: eine Darstellung der Längenbeschränkung von ICMP-Paketen.

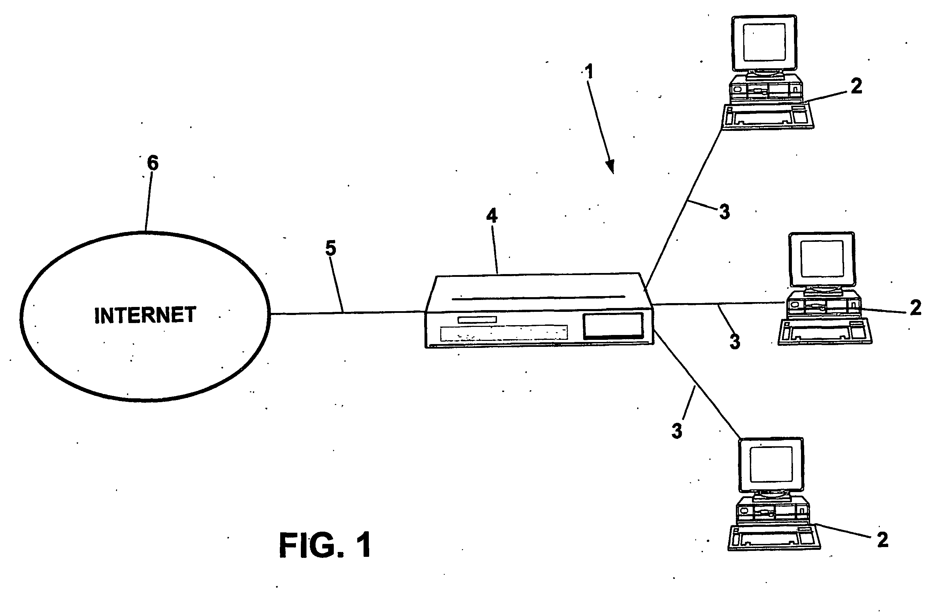

Das Computersystem 1 gemäß den Fig. 1 bis 3 besteht aus mehreren Server-Computern 2, die gegebenenfalls miteinander durch nicht weiter dargestellte Datenleitungen miteinander vernetzt sind. Die Server-Computer 2 sind jeweils über eine Datenleitung 3 mit einem elektronischen Gerät 4 verbunden. Dieses weist einen nicht näher dargestellten, als EPROM ausgebildeten Datenträger auf, der mit einem Computerprogramm zur Erkennung und Abwehr von Angriffen auf Serversysteme von Netzwerk-Diensteanbietern und -betreibern versehen ist.

Das elektronische Gerät 4 ist gemäß Fig. 1 über eine ISDN-Datenleitung 5 mit dem Internet 6 verbunden. Das elektronische Gerät 4 dient dem Schutz von DoS- und DDoS-Attacken und besitzt eine erweiterte Funktionalität als Internet-Gateway über ISDN. Ferner ist das elektronische Gerät 4 mit einem Ethernet- und einem ISDN-Adapter ausgestattet. Neben dem Schutz der im Local Area Network (LAN) liegenden Systeme vor DoS- und DDoS-Attacken wird das elektronische Gerät 4 als Router für den Zugriff auf Dienste des Internets verwendet. Der ISDN-Verbindungsaufbau erfolgt standardmäßig immer dann, wenn eine Kommunikationsanbindung an das externe Netzwerk gewünscht wird. Der Verbindungsaufbau erfolgt automatisch, wenn das im elektronischen Gerät 4 auf dem EPROM enthaltene Computerprogramm nach einer definierten Zeitspanne keine weiteren Netzwerkpakete weiterleitet. Dieses Standardverhalten kann jedoch durch entsprechende Konfiguration geändert werden.

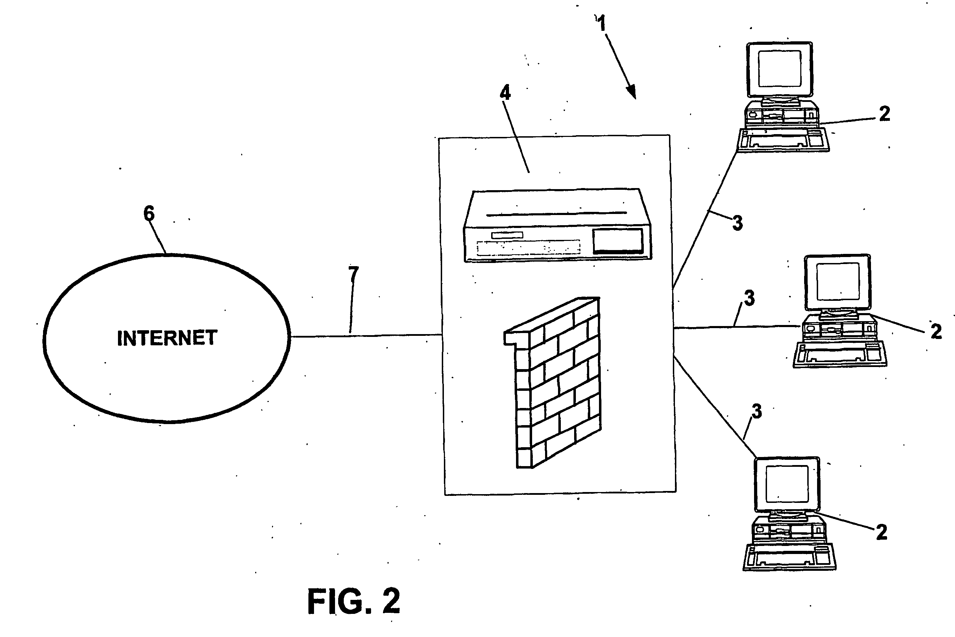

Das elektronische Gerät 4 gemäß Fig. 2 ist über eine ISDN/Ethernet-Datenleitung 7 beispielsweise mit dem Internet 6 verbunden. Ferner ist in das elektronische Gerät 4 ein nicht sichtbarer Firewall-Funktionsmodul integriert, so dass es als integrierter Firewall-Router eingesetzt wird, gegebenenfalls über einen weiteren dedizierten Router. Die Server-Computer 2 bzw. Arbeitsplatzrechner des internen Netzwerkes nutzen das elektronische Gerät 4 mit dem das Computerprogramm zur Erkennung und Abwehr von Angriffen auf Serversysteme von Netzwerk-Diensteanbietern und -betreibern enthaltenden EPROM als Übergang in das Internet über Ethernet oder ISDN. Weiterhin schützt das elektronische Gerät 4 die internen Systeme vor DoS- und DDoS-Attacken. Dabei werden ein- und ausgehende IP-Pakete mittels definierter Regeln weitergeleitet oder verworfen. Der Zugriff auf die öffentlich zugänglichen Dienste auf den lokalen Systemen wird an Hand definierter Regeln erlaubt oder abgewiesen.

Die für die einzelnen Funktionen notwendigen Regelwerke werden über ein Konfigurationsprogramm erstellt und modifiziert, das auch den vereinfachten Benutzereingaben ein vom System lesbares Konfigurationsset erstellt. Die vom elektronischen Gerät 4 mit dem Computerprogramm zur Erkennung und Abwehr von Angriffen auf Serversysteme von Netzwerk-Diensteanbietern und -betreibern angebotenen Funktionen sind weitestgehend frei konfigurierbar und können somit für den Einsatz in das eigene Netzwerk optimal eingestellt werden.

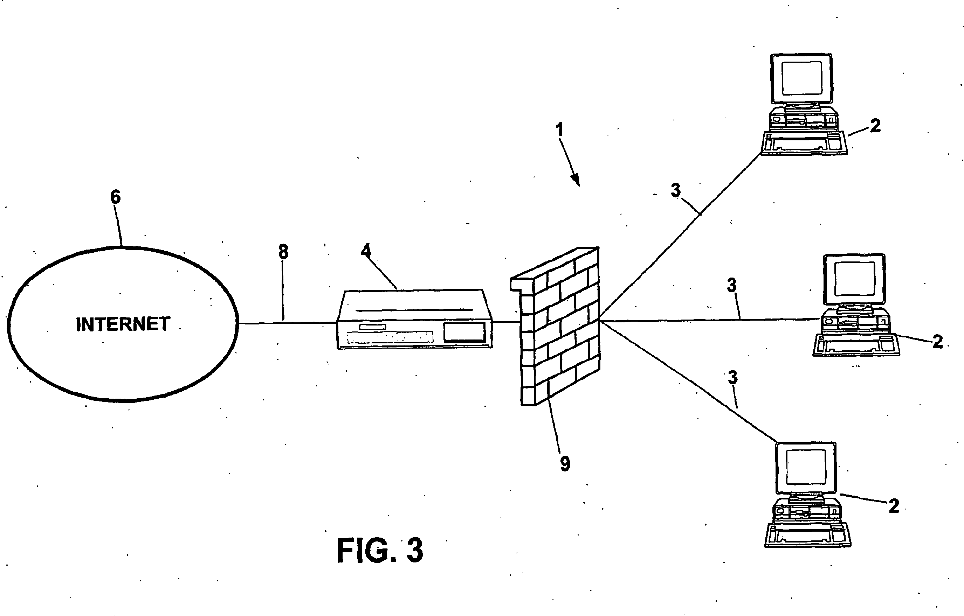

Bei der Ausführungsform der Erfindung nach Fig. 3 ist das Firewall-Funktionsmodul 9 separat; d.h. getrennt zwischen den Server-Computern 2 und dem elektronischen Gerät 4 mit dem Computerprogramm zur Erkennung und Abwehr von Angriffen auf Serversysteme von Netzwerk-Diensteanbieternund -betreibern geschaltet. Das elektronische Gerät 4 ist über eine Ethernet-Datenleitung 8 mit dem Internet 6 verbunden und bietet den notwendigen Schutz vor DoS- und DDoS-Angriffen (Flood-Attacken). Nur Netzwerkpakete, die erkennbar nicht das betroffene Zielsystem schaden können, werden an die Firewall zur weiteren Bearbeitung geleitet. Auf der Firewall wird anschließend entscheiden, ob die Netzwerkpakete weitergeleitet oder abgewiesen werden.

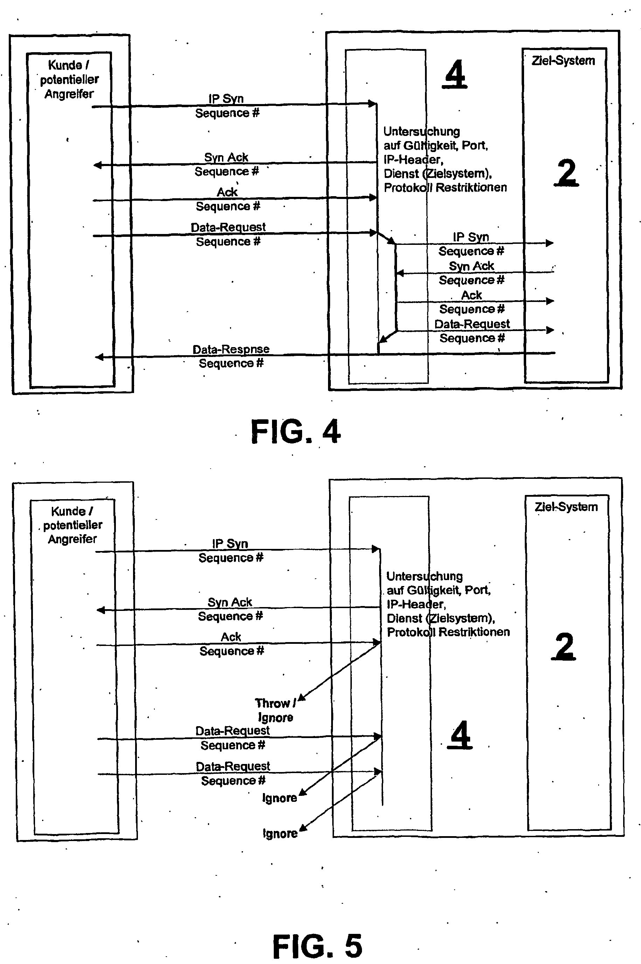

Fig. 4 zeigt eine schematische Darstellung der Verfahrensweise beim Verbindungsaufbau und zulässigem Protokollgebrauch, während Fig. 5 die Verfahrensweise beim Verbindungsaufbau mit unzulässigem Protokollgebrauch darstellt.

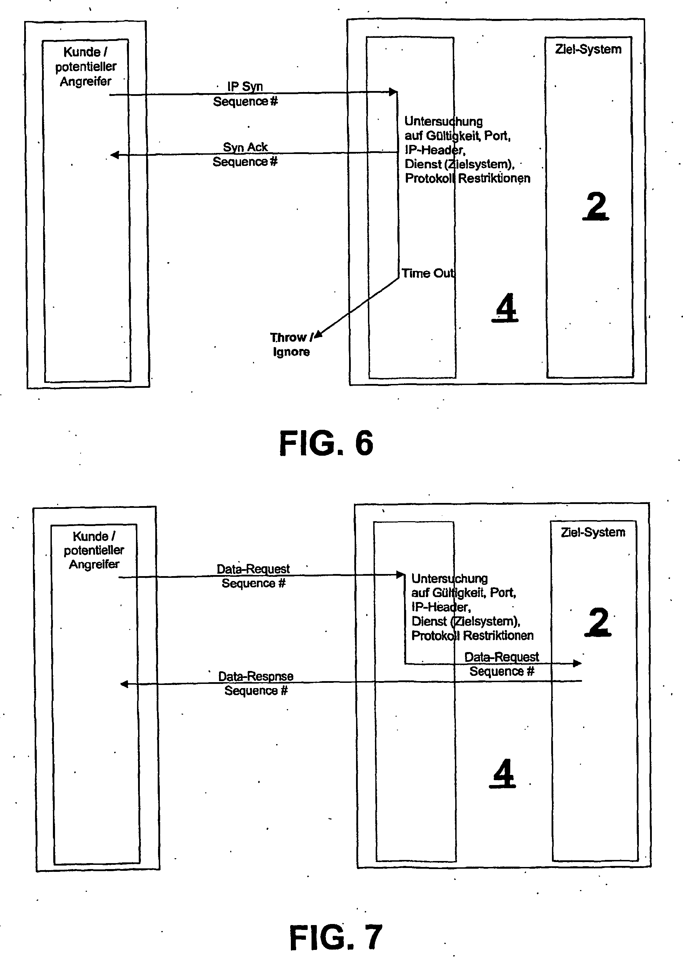

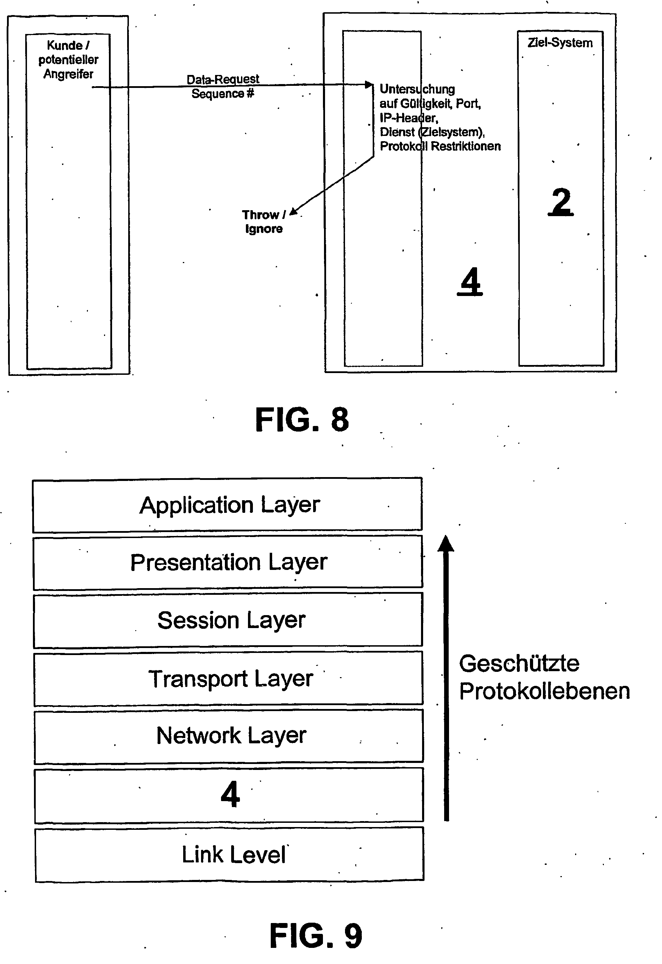

In Fig. 6 wird das erfindungsgemäßen Verfahrensweise beim unvollständigen Verbindungsaufbau gezeigt. Fig. 7 stellt schematisch die Verfahrensweise nach dem Verbindungsaufbau bei zulässigem Datenverkehr und Fig. 8 die Verfahrensweise nach dem Verbindungsaufbau bei unzulässigem Datenverkehr dar.

Fig. 9 zeigt eine schematische Darstellung der durch ein elektronisches Gerät geschützten Protokollebenen, welches ein Computerprogramm zur Erkennung und Abwehr von Angriffen auf Serversysteme von Netzwerk-Diensteanbietern und -betreibern enthaltenden EPROM aufweist.

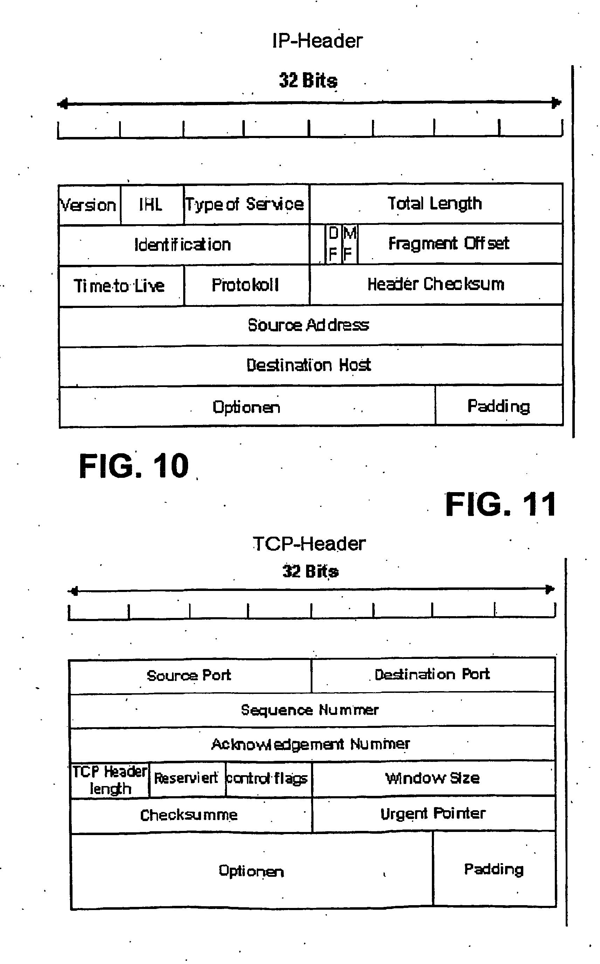

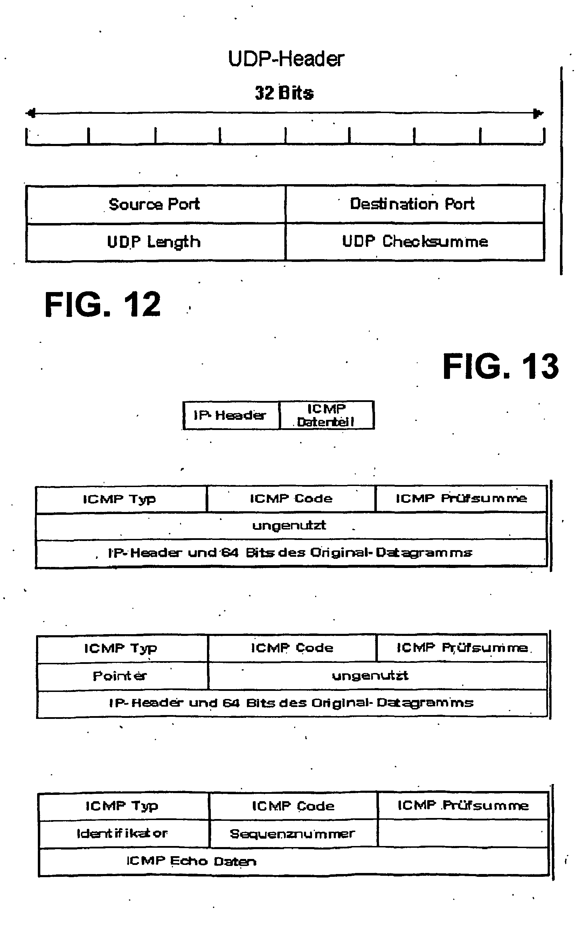

Die Fig. 10 zeigt eine Darstellung der Untersuchung gültiger IP-Header. In Fig. 11 ist die der Untersuchung eines IP-Pakets dargestellt. Fig. 12 zeigt eine Darstellung der Untersuchung von einstellbaren UDP-Verbindungen und Fig. 13zeigt eine Darstellung der Längenbeschränkung von ICMP-Paketen.

### Liste der Bezugszeichen

- 1: Computersystem
- 2: Server-Computer
- 3: Datenleitung
- 4: elektronisches Gerät
- 5: ISDN-Datenleitung
- 6: Internet
- 7: ISDN/Ethernet-Datenleitung
- 8: Ethernet-Datenleitung

## Patentansprüche

1. Verfahren zur Erkennung und Abwehr von Angriffen auf Serversysteme (2) von Netzwerk-Diensteanbietern und -betreibern mittels eines in ein Computer-Netzwerk (1) einzubindenden elektronischen Gerätes (4), dass ein Computerprogramm enthält, **gekennzeichnet durch** die Verfahrensschritte
- Schutz vor DoS- und DDoS-Attacken (Flood-Attacken), wobei,
- jeder IP Syn (IP-Verbindungsaufbauwunsch) registriert und zur Bewahrung im IP-Protokoll festgelegten Zeitbeschränkung mit einem Syn Ack beantwortet wird, während das registrierte Syn-Paket auf Gültigkeit und die im Zielssystem verfügbaren Dienste geprüft wird und
- der Verbindungsaufbau mit dem Zielsystem initialisiert und das empfangene Datenpaket an das Zielsystem zur weiteren Bearbeitung übergeben wird, wenn die Prüfung erfolgreich abgeschlossen ist und zwischenzeitlich der wiederum von dem von außen anfragenden System auszusendende Ack sowie ein darauf folgendes gültiges Datenpaket empfangen wurde, und
- Link Level Sicherheit, wobei die zu prüfenden Datenpakete direkt von der OSI-Schicht 2 (Link Level) übernommen wird, und
- Untersuchung gültiger IP-Header, wobei der Aufbau jedes IP-Paketes vor dessen Weiterleitung auf das Zielsystem auf Gültigkeit überprüft und jedes ungültige IP-Paket verworfen wird, und
- Untersuchung des IP-Paketes **durch** Überprüfung insbesondere der Länge und der Prüfsumme des IP-Paketes auf Übereinstimmung der Angaben im TCP- oder IP-Header mit dem Aufbau des IP-Paketes, und
- TCP/IP Fingerprint-Schutz, wobei der als Antwort ausgehende Datenverkehr von den geschützten Systemen zu den von außen anfragenden Systemen neutralisiert wird, indem musterhafte Protokoll-Identifizierer verwendet werden, und
- Sperrung aller UDP-Netzwerkpakete zur Verhinderung von Angriffen auf die geschützten Systeme über das Netzwerkprotokoll UDP, indem über UDP erreichbare benötigte Dienste gezielt registriert und freigegeben werden, wobei Nachrichten explizit für diese UDP-Ports zugelassen werden, die übrigen Ports jedoch geschlossen bleiben, und
- Längenbeschränkungen von ICMP-Paketen, wobei ICMP_Nachrichten nur in einer vorgegebenen Maximallänge als gültige Datenpakete erkannt und hiervon abweichende ICMP-Pakete verworfen werden, und
- Ausschließen bestimmter externer IP-Adressen von der Kommunikation mit dem Zielsystem, und
- Paket-Level-Firewall-Funktion, wobei ein- und ausgehende IP-Pakete mittels frei definierbarer Regeln untersucht und auf Grund dieser Regeln abgelehnt oder an das Zielsystem weitergeleitet werden, und
- Schutz von erreichbaren Diensten des Zielsystems durch Ausschluss bestimmter Dienste und Benutzer und Umlenkung von Diensteanfragen auf andere Server (2).

2. Verfahren nach Anspruch 1, **dadurch gekennzeichnet, dass** bei der Längenbeschränkung von ICMP-Paketen die ungültige Länge des ICMP-Paketes auf eine zulässige Länge reduziert wird.

3. Verfahren nach Anspruch 1, **dadurch gekennzeichnet, dass** bei der Längenbeschränkung von ICMP-Paketen die einzelnen ICPM-Nachrichtentypen vollständig gesperrt werden.

4. Verfahren nach Anspruch 1, **dadurch gekennzeichnet, dass** die Regeln für die Paket-Level-Firewall-Funktion auf der Basis bestimmter Kriterien eines IP-Paketes insbesondere in Bezug auf Ausschlüsse, Einschränkungen und Log-Ausgaben festgelegt werden.

5. Verfahren nach den Ansprüchen 1 bis 4, **dadurch gekennzeichnet, dass** zur kontrollierten Konfiguration und Sicherstellung der uneingeschränkten Funktion des Verfahrens administrative Eingriffe nur von einer Konsole oder über gesicherte Netzwerk-Verbindungswege erfolgen.

6. Verfahren nach den Ansprüchen 1 bis 5, **dadurch gekennzeichnet, dass** der Zugriff auf das Zielsystem über frei einstellbare Zeitfenster detailliert eingeschränkt wird.

7. Datenträger, enthaltend ein Computerprogramm zur Erkennung und Abwehr von Angriffen auf Serversysteme von Netzwerk-Diensteanbietern und -betreibern zum Einsatz in einem in ein Computer-Netzwerk (1) einzubindenden elektronischen Gerät (4), das Computerprogamm **gekennzeichnet durch** die Programmschritte
- Schutz vor DoS- und DDoS-Attacken (Flood-Attacken.), wobei,
- jeder IP Syn (IP-Verbindungsaufbauwunsch) registriert und zur Bewahrung im IP-Protokoll festgelegten Zeitbeschränkung mit einem Syn Ack beantwortet wird, während das registrierte Syn-Paket auf Gültigkeit und die im Zielssystem verfügbaren Dienste geprüft wird und
- der Verbindungsaufbau mit dem Zielsystem initialisiert und das empfangene Datenpaket an das Zielsystem zur weiteren Bearbeitung übergeben wird, wenn die Prüfung erfolgreich abgeschlossen ist und zwischenzeitlich der wiederum von dem von außen anfragenden System auszusendende Ack sowie ein darauf folgendes gültiges Datenpaket empfangen wurde, und
- Link Level Sicherheit, wobei die zu prüfenden Datenpakete direkt von der OSI-Schicht 2 (Link Level) übernommen wird, und
- Untersuchung gültiger IP-Header, wobei der Aufbau jedes IP-Paketes vor dessen Weiterleitung auf das Zielsystem auf Gültigkeit überprüft und jedes ungültige IP-Paket verworfen wird, und
- Untersuchung des IP-Paketes **durch** Überprüfung insbesondere der Länge und der Prüfsumme des IP-Paketes auf Übereinstimmung der Angaben im TCP- oder IP-Header mit dem Aufbau des IP-Paketes, und
- TCP/IP Fingerprint-Schutz, wobei der als Antwort ausgehende Datenverkehr von den geschützten Systemen zu den von außen anfragenden Systemen neutralisiert wird, indem musterhafte Protokoll-Identifizierer verwendet werden, und
- Sperrung aller UDP-Netzwerkpakete zur Verhinderung von Angriffen auf die geschützten Systeme über das Netzwerkprotokoll UDP, indem über UDP erreichbare benötigte Dienste gezielt registriert und freigegeben werden, wobei Nachrichten explizit für diese UDP-Ports zugelassen werden, die übrigen Ports jedoch geschlossen bleiben, und
- Längenbeschränkungen von ICMP-Paketen, wobei ICMP_Nachrichten nur in einer vorgegebenen Maximallänge als gültige Datenpakete erkannt und hiervon abweichende ICMP-Pakete verworfen werden, und
- Ausschließen bestimmter externer IP-Adressen von der Kommunikation mit dem Zielsystem, und
- Paket-Level-Firewall-Funktion, wobei ein- und ausgehende IP-Pakete mittels frei definierbarer Regeln untersucht und auf Grund dieser Regeln abgelehnt oder an das Zielsystem weitergeleitet werden, und
- Schutz von erreichbaren Diensten des Zielsystems durch Ausschluss bestimmter Dienste und Benutzer und Umlenkung von Diensteanfragen auf andere Server.

8. Datenträger nach Anspruch 5, **dadurch gekennzeichnet, dass** dieser als EPROM ausgebildet und Bestandteil eines elektronischen Gerätes (4) ist.

9. Computersystem, dass mit einem Netzwerk, wie Internet (6), Intranet und dergleichen, verbindbar ist, aufweisend einen oder mehrere Computer, die als Server-Computer (2) oder als Client-Computer konfiguriert sind, das Computersystem **dadurch gekennzeichnet, dass** es ein in eine zu schützende Datenleitung (5, 7, 8) zwischen das Netzwerk (6) und den Server- (2) oder Client-Computer enthält geschaltetes elektronisches Gerät (4) enthält, welches mit einem Datenträger versehen ist, der ein Computerprogramm aufweist, das die Programmschritte enthält:
- Schutz vor DoS- und DDoS-Attacken (Flood-Attacken), wobei,
- jeder IP Syn (IP-Verbindungsaufbauwunsch) registriert und zur Bewahrung im IP-Protokoll festgelegten Zeitbeschränkung mit einem Syn Ack beantwortet wird, während das registrierte Syn-Paket auf Gültigkeit und die im Zielssystem verfügbaren Dienste geprüft wird und
- der Verbindungsaufbau mit dem Zielsystem initialisiert und das empfangene Datenpaket an das Zielsystem zur weiteren Bearbeitung übergeben wird, wenn die Prüfung erfolgreich abgeschlossen ist und zwischenzeitlich der wiederum von dem von außen anfragenden System auszusendende Ack sowie ein darauf folgendes gültiges Datenpaket empfangen wurde, und
- Link Level Sicherheit, wobei die zu prüfenden Datenpakete direkt von der OSI-Schicht 2 (Link Level) übernommen wird, und
- Untersuchung gültiger IP-Header, wobei der Aufbau jedes IP-Paketes vor dessen Weiterleitung auf das Zielsystem auf Gültigkeit überprüft und jedes ungültige IP-Paket verworfen wird, und
- Untersuchung des IP-Paketes durch Überprüfung insbesondere der Länge und der Prüfsumme des IP-Paketes auf Übereinstimmung der Angaben im TCP- oder IP-Header mit dem Aufbau des IP-Paketes, und
- TCP/IP Fingerprint-Schutz, wobei der als Antwort ausgehende Datenverkehr von den geschützten Systemen zu den von außen anfragenden Systemen neutralisiert wird, indem musterhafte Protokoll-Identifizierer verwendet werden, und
- Sperrung aller UDP-Netzwerkpakete zur Verhinderung von Angriffen auf die geschützten Systeme über das Netzwerkprotokoll UDP, indem über UDP erreichbare benötigte Dienste gezielt registriert und freigegeben werden, wobei Nachrichten explizit für diese UDP-Ports zugelassen werden, die übrigen Ports jedoch geschlossen bleiben, und
- Längenbeschränkungen von ICMP-Paketen, wobei ICMP_Nachrichten nur in einer vorgegebenen Maximallänge als gültige Datenpakete erkannt und hiervon abweichende ICMP-Pakete verworfen werden, und
- Ausschließen bestimmter externer IP-Adressen von der Kommunikation mit dem Zielsystem, und
- Paket-Level-Firewall-Funktion, wobei ein- und ausgehende IP-Pakete mittels frei definierbarer Regeln untersucht und auf Grund dieser Regeln abgelehnt oder an das Zielsystem weitergeleitet werden, und
- Schutz von erreichbaren Diensten des Zielsystems durch Ausschluss bestimmter Dienste und Benutzer und Umlenkung von Diensteanfragen auf andere Server.

10. Computerprogrammprodukt, aufweisend Computerproramm-Codes zur Erkennung und Abwehr von Angriffen auf Serversysteme von Netzwerk-Diensteanbietern und -betreibern mittels eines in ein Computer-Netzwerk (1) einzubindenden elektronischen Gerätes (4), dass dieses Computerprogrammprodukt enthält, **gekennzeichnet durch** die Programmschritte
- Schutz vor DoS- und DDoS-Attacken (Flood-Attacken), wobei,
- jeder IP Syn (IP-Verbindungsaufbauwunsch) registriert und zur Bewahrung im IP-Protokoll festgelegten Zeitbeschränkung mit einem Syn Ack beantwortet wird, während das registrierte Syn-Paket auf Gültigkeit und die im Zielssystem verfügbaren Dienste geprüft wird und
- der Verbindungsaufbau mit dem Zielsystem initialisiert und das empfangene Datenpaket an das Zielsystem zur weiteren Bearbeitung übergeben wird, wenn die Prüfung erfolgreich abgeschlossen ist und zwischenzeitlich der wiederum von dem von außen anfragenden System auszusendende Ack sowie ein darauf folgendes gültiges Datenpaket empfangen wurde, und
- Link Level Sicherheit, wobei die zu prüfenden Datenpakete direkt von der OSI-Schicht 2 (Link Level) übernommen wird, und
- Untersuchung gültiger IP-Header, wobei der Aufbau jedes IP-Paketes vor dessen Weiterleitung auf das Zielsystem auf Gültigkeit überprüft und jedes ungültige IP-Paket verworfen wird, und
- Untersuchung des IP-Paketes **durch** Überprüfung insbesondere der Länge und der Prüfsumme des IP-Paketes auf Übereinstimmung der Angaben im TCP- oder IP-Header mit dem Aufbau des IP-Paketes, und
- TCP/IP Fingerprint-Schutz, wobei der als Antwort ausgehende Datenverkehr von den geschützten Systemen zu den von außen anfragenden Systemen neutralisiert wird, indem musterhafte Protokoll-Identifizierer verwendet werden, und
- Sperrung aller UDP-Netzwerkpakete zur Verhinderung von Angriffen auf die geschützten Systeme über das Netzwerkprotokoll UDP, indem über UDP erreichbare benötigte Dienste gezielt registriert und freigegeben werden, wobei Nachrichten explizit für diese UDP-Ports zugelassen werden, die übrigen Ports jedoch geschlossen bleiben, und
- Längenbeschränkungen von ICMP-Paketen, wobei ICMP_Nachrichten nur in einer vorgegebenen Maximallänge als gültige Datenpakete erkannt und hiervon abweichende ICMP-Pakete verworfen werden, und
- Ausschließen bestimmter externer IP-Adressen von der Kommunikation mit dem Zielsystem, und
- Paket-Level-Firewall-Funktion, wobei ein- und ausgehende IP-Pakete mittels frei definierbarer Regeln untersucht und auf Grund dieser Regeln abgelehnt oder an das Zielsystem weitergeleitet werden, und
- Schutz von erreichbaren Diensten des Zielsystems durch Ausschluss bestimmter Dienste und Benutzer und Umlenkung von Diensteanfragen auf andere Server.

## Claims

1. Method for recognize and refuse attacks on server systems (2) of network providers and operators by means of an electronic device (4) to be implemented in a computer network (1), this device contains a computer program, **characterized by** the steps of procedures:
- defense against DoS and DDoS attacks (flood attacks) whereas
- each IP SYN (IP connection request) is registered and answered with a SYN ACK for preservation of time restrictions (timeouts) defined in the IP protocol while the registered SYN packet is checked for validity and available services in the target system and
- the connection to the target system is initialized and the received data packet is forwarded to the target system for further processing if the verification was successful and the expected ACK as well as a consecutively following valid data packet was received from the requesting external system in the meantime, and
- link level security whereas the data packets which have to be checked are received directly from the OSI layer 2 (link level), and
- examination of valid IP headers whereas the structure of each IP packet is checked for validity before it is forwarded to the target system and each invalid packet is rejected, and
- examination of the IP packet by especially checking the length and the checksum for conformity of the values in the TCP or IP header with the structure of the IP packet and
- TCP/IP fingerprint protection whereas the answering outgoing data traffic from the secured systems to the requesting external systems is neutralized by using default protocol identifiers, and
- blocking of each UDP network packet for avoiding attacks at the secured systems via the network protocol UDP (user datagram protocol), by selectively registering and unblocking services required to be reached via UDP whereas for these UDP ports messages are explicitly admitted and the other UDP ports stay closed, and
- length restrictions of ICMP packets (Internet control message protocol) whereas only ICMP messages with a predefined maximal length are identified as valid data and others are rejected, and
- exclusion of specific external IP addresses from the communication with the target system, and
- packet-level firewall function whereas incoming and outgoing IP packets are examined by freely definable rules and because of these rules are rejected or forwarded to the target system, and
- protection of reachable services of the target system by exclusion of specific services and users and redirection of service requests to other servers.

2. Method according to claim 1, **characterized by** the fact that with the limitation in length of ICMP packets, the invalid length of a ICMP packet is reduced to an approved length.

3. Method according to claim 1, **characterized by the fact** that with the limitation in length of ICMP packets, single ICMP types of message are entirely blocked.

4. Method according to claim 1, **characterized by the fact** that the rules for the packet-level-firewall-function are determined on the basis of certain criteria of a IP packet, especially concerning exclusions, limitations and log editions.

5. Method according to claims 1 to 4, **characterized by** the fact that in order to achieve a controlled configuration and to guarantee unlimited function of the procedure, administrative operations can only be effected from a console or via secure network connection ways.

6. Method according to claims 1 to 5, **characterized by** the fact that the access on a target system is limited on time windows which could be set freely.

7. Data carrier containing a computer program for recognizing and refusing attacks on server systems of network service providers and operators for the use of an electronic device (4) to be included in a computer network (1), said computer program **characterized by** the programme steps:
- defense against DoS and DDoS attacks (flood attacks) whereas
- each IP SYN (IP connection request) is registered and answered with a SYN ACK for preservation of time restrictions (timeouts) defined in the IP protocol while the registered SYN packet is checked for validity and available services in the target system and
- the connection to the target system is initialized and the received data packet is forwarded to the target system for further processing if the verification was successful and the expected ACK as well as a consecutively following valid data packet was received from the requesting external system in the meantime, and
- link level security whereas the data packets which have to be checked are received directly from the OSI layer 2 (link level), and
- examination of valid IP headers whereas the structure of each IP packet is checked for validity before it is forwarded to the target system and each invalid packet is rejected, and
- examination of the IP packet by especially checking the length and the checksum for conformity of the values in the TCP or IP header with the structure of the IP packet and
- TCP/IP fingerprint protection whereas the answering outgoing data traffic from the secured systems to the requesting external systems is neutralized by using default protocol identifiers, and
- blocking of each UDP network packet for avoiding attacks at the secured systems via the network protocol UDP (user datagram protocol), by selectively registering and unblocking services required to be reached via UDP whereas for these UDP ports messages are explicitly admitted and the other UDP ports stay closed, and
- length restrictions of ICMP packets (Internet control message protocol) whereas only ICMP messages with a predefined maximal length are identified as valid data and others are rejected, and
- exclusion of specific external IP addresses from the communication with the target system, and
- packet-level firewall function whereas incoming and outgoing IP packets are examined by freely definable rules and because of these rules are rejected or forwarded to the target system, and
- protection of reachable services of the target system by exclusion of specific services and users and redirection of service requests to other servers.

8. Data carrier according to claim 5, **characterized by the fact** that this one is instructed as EPROM and as a component of an electronic device (4).

9. Computer system being connected to network such as Internet (6), Intranet or any similar one, containing one computer or several computers configured as server computer (2) or as client computer, said computer system **characterized by** the fact that said computer system is equipped with an electronic device (4) switched in a data line (5, 7, 8) to be protected between the network (6) and the server (2) or client computer, whereby this device has got a data carrier with a computer program containing the programme steps:
- defense against DoS and DDoS attacks (flood attacks) whereas
- each IP SYN (IP connection request) is registered and answered with a SYN ACK for preservation of time restrictions (timeouts) defined in the IP protocol while the registered SYN packet is checked for validity and available services in the target system and
- the connection to the target system is initialized and the received data packet is forwarded to the target system for further processing if the verification was successful and the expected ACK as well as a consecutively following valid data packet was received from the requesting external system in the meantime, and
- link level security whereas the data packets which have to be checked are received directly from the OSI layer 2 (link level), and
- examination of valid IP headers whereas the structure of each IP packet is checked for validity before it is forwarded to the target system and each invalid packet is rejected, and
- examination of the IP packet by especially checking the length and the checksum for conformity of the values in the TCP or IP header with the structure of the IP packet and
- TCP/IP fingerprint protection whereas the answering outgoing data traffic from the secured systems to the requesting external systems is neutralized by using default protocol identifiers, and
- blocking of each UDP network packet for avoiding attacks at the secured systems via the network protocol UDP (user datagram protocol), by selectively registering and unblocking services required to be reached via UDP whereas for these UDP ports messages are explicitly admitted and the other UDP ports stay closed, and
- length restrictions of ICMP packets (Internet control message protocol) whereas only ICMP messages with a predefined maximal length are identified as valid data and others are rejected, and
- exclusion of specific external IP addresses from the communication with the target system, and
- packet-level firewall function whereas incoming and outgoing IP packets are examined by freely definable rules and because of these rules are rejected or forwarded to the target system, and
- protection of reachable services of the target system by exclusion of specific services and users and redirection of service requests to other servers.

10. Computer programme product containing computer codes for recognizing and refusing attacks on server systems of network service providers and operators by means of an electronic device (4) to be included in a computer network (1), **characterized by** the programme steps:
- defense against DoS and DDoS attacks (flood attacks) whereas
- each IP SYN (IP connection request) is registered and answered with a SYN ACK for preservation of time restrictions (timeouts) defined in the IP protocol while the registered SYN packet is checked for validity and available services in the target system and
- the connection to the target system is initialized and the received data packet is forwarded to the target system for further processing if the verification was successful and the expected ACK as well as a consecutively following valid data packet was received from the requesting external system in the meantime, and
- link level security whereas the data packets which have to be checked are received directly from the OSI layer 2 (link level), and
- examination of valid IP headers whereas the structure of each IP packet is checked for validity before it is forwarded to the target system and each invalid packet is rejected, and
- examination of the IP packet by especially checking the length and the checksum for conformity of the values in the TCP or IP header with the structure of the IP packet and
- TCP/IP fingerprint protection whereas the answering outgoing data traffic from the secured systems to the requesting external systems is neutralized by using default protocol identifiers, and
- blocking of each UDP network packet for avoiding attacks at the secured systems via the network protocol UDP (user datagram protocol), by selectively registering and unblocking services required to be reached via UDP whereas for these UDP ports messages are explicitly admitted and the other UDP ports stay closed, and
- length restrictions of ICMP packets (Internet control message protocol) whereas only ICMP messages with a predefined maximal length are identified as valid data and others are rejected, and
- exclusion of specific external IP addresses from the communication with the target system, and
- packet-level firewall function whereas incoming and outgoin IP packets are examined by freely definable rules and because of these rules are rejected or forwarded to the target system, and
- protection of reachable services of the target system by exclusion of specific services and users and redirection of service requests to other servers.

## Revendications

1. Procédé de détection et de défense d'attaques sur des systèmes de serveur (2) d'offrants et d'exploitants de services en réseau par le biais d'un appareil électronique (4) à intégrer dans un réseau d'ordinateurs (1) contenant un programme informatique **caractérisé par** les opérations du procédé
- protection contre les attaques DoS et DDoS (attaques flood),
- chaque IP Syn (demande de mise en oeuvre d'une connexion) étant enregistré et recevant une réponse avec un Syn Ack dans la limitation de temps fixée dans le protocole IP alors que la validité et les services disponibles dans le système cible sont testés le paquet Syn enregistré et
- la mise en oeuvre de la connexion étant initialisé avec le système cible et le paquet de données reçu transmis au système cible pour poursuite de traitement lorsque le contrôle s'est avéré positif et qu'entre-temps l'Ack à envoyer par le système interrogeant de l'extérieur ainsi qu'un paquet de données consécutif valable ont été reçus et
- sécurité niveau lien, les paquets de données à contrôler étant repris directement de la couche OSI 2 (niveau lien) et
- examen d'en-tête IP, la validité de la structure de chaque paquet IP étant vérifié avant sa transmission au système cible et chaque paquet IP non valide étant rejeté et
- examen du paquet IP par vérification en particulier de la longueur et la somme de test du paquet IP pour constater que les données dans l'entête TCP ou IP concordent avec la structure du paquet IP et
- protection d'empreinte TCP/IP, le transfert de données sortant comme réponse étant neutralisé par les systèmes protégés aux systèmes interrogeant de l'extérieur en utilisant des identificateurs de protocole modèle et
- blocage de tous les paquets UDP pour éviter les attaques sur les systèmes protégés par l'intermédiaire du protocole de réseau UDP en enregistrant et validant de façon ciblée des services nécessaires joignables par UDP, les informations étant autorisées explicitement pour ces port UDP, les autres ports restant cependant fermés et
- limitations de longueur des paquets ICMP, les informations ICMP n'étant reconnues comme paquets de données valables qu'en un longueur maximale prescrite et les paquets ICMP s'en écartant étant rejetés et
- exclusion de certaines adresses IP externes de la communication avec le système cible et
- fonction firewall niveau paquet, les paquets IP entrants et sortants étant examinés par l'intermédiaire de règles librement définissables et sur la base de ces règles, sont refusés ou transmis au système cible et
- protection de services joignables du système cible par exclusion de certains services et utilisateurs et déviation de demandes de service vers d'autres serveurs (2).

2. Procédé selon la revendication 1 **caractérisé en ce que** pour la limitation de longueur de paquets ICMP, la longueur non valable du paquet ICMP est réduite à une longueur autorisée.

3. Procédé selon la revendication 1 **caractérisé en ce que** pour la limitation de longueur de paquets ICMP, les différents types d'informations ICPM sont entièrement bloqués.

4. Procédé selon la revendication 1 **caractérisé en ce que** les règles de la fonction firewall de niveau de paquet ont été fixées sur la base de certains critères d'un paquet IP en particulier en référence aux exclusions, limitations et sorties Log.

5. Procédé selon les revendications 1 à 4 **caractérisé en ce que** pour la configuration contrôlée et l'assurance de la fonction illimitée du procédé, des interventions ne s'effectuent qu'à partir d'une console ou par l'intermédiaire des canaux de connexions de réseau assurés.

6. Procédé selon les revendications 1 à 5 **caractérisé en ce que** l'accès au système cible est limité par une fenêtre temps librement paramétrable.

7. Support de données contenant un programme informatique de détection et de défense d'attaques sur des systèmes de serveur d'offrants et d'exploitants de services pour utilisation dans un appareil électronique (4) à intégrer dans un réseau d'ordinateurs (1), le programme informatique **caractérisé par** les opérations de procédé:
- protection contre les attaques DoS et DDoS (attaques flood),
- chaque IP Syn (demande de mise en oeuvre d'une connexion) étant enregistré et recevant une réponse avec un Syn Ack dans la limitation de temps fixée dans le protocole IP alors que la validité et les services disponibles dans le système cible sont testés le paquet Syn enregistré et
- la mise en oeuvre de la connexion étant initialisé avec le système cible et le paquet de données reçu transmis au système cible pour poursuite de traitement lorsque le contrôle s'est avéré positif et qu'entre-temps l'Ack à envoyer par le système interrogeant de l'extérieur ainsi qu'un paquet de données consécutif valable ont été reçus et
- sécurité niveau lien, les paquets de données à contrôler étant repris directement de la couche OSI 2 (niveau lien) et
- examen d'en-tête IP, la validité de la structure de chaque paquet IP étant vérifié avant sa transmission au système cible et chaque paquet IP non valide étant rejeté et
- examen du paquet IP par vérification en particulier de la longueur et la somme de test du paquet IP pour constater que les données dans l'entête TCP ou IP concordent avec la structure du paquet IP et
- protection d'empreinte TCP/IP, le transfert de données sortant comme réponse étant neutralisé par les systèmes protégés aux systèmes interrogeant de l'extérieur en utilisant des identificateurs de protocole modèle et
- blocage de tous les paquets UDP pour éviter les attaques sur les systèmes protégés par l'intermédiaire du protocole de réseau UDP en enregistrant et validant de façon ciblée des services nécessaires joignables par UDP, les informations étant autorisées explicitement pour ces port UDP, les autres ports restant cependant fermés et
- limitations de longueur des paquets ICMP, les informations ICMP n'étant reconnues comme paquets de données valables qu'en un longueur maximale prescrite et les paquets ICMP s'en écartant étant rejetés et
- exclusion de certaines adresses IP externes de la communication avec le système cible et
- fonction firewall niveau paquet, les paquets IP entrants et sortants étant examinés par l'intermédiaire de règles librement définissables et sur la base de ces règles, sont refusés ou transmis au système cible et
- protection de services joignables du système cible par exclusion de certains services et utilisateurs et déviation de demandes de service vers d'autres serveurs.

8. Support de données selon la revendication 5 **caractérisé en ce que** celui-ci est formé comme EPROM et est partie d'un appareil électronique (4).

9. Système informatique pouvant être connecté à un réseau tel qu'Internet (6), Intranet et similaire, présentant un ou plusieurs ordinateurs qui sont configurés comme ordinateur de serveur (2) ou comme ordinateur client, le système informatique **caractérisé en ce que** le système informatique contient un appareil électronique (4) commuté dans un câble de données à protéger (5, 7, 8) entre le réseau (6) et l'ordinateur serveur (2) ou client qui est pourvu d'un support de données présentant un programme informatique contenant les opérations de programme:
- protection contre les attaques DoS et DDoS (attaques flood),
- chaque IP Syn (demande de mise en oeuvre d'une connexion) étant enregistré et recevant une réponse avec un Syn Ack dans la limitation de temps fixée dans le protocole IP alors que la validité et les services disponibles dans le système cible sont testés le paquet Syn enregistré et
- la mise en oeuvre de la connexion étant initialisé avec le système cible et le paquet de données reçu transmis au système cible pour poursuite de traitement lorsque le contrôle s'est avéré positif et qu'entre-temps l'Ack à envoyer par le système interrogeant de l'extérieur ainsi qu'un paquet de données consécutif valable ont été reçus et
- sécurité niveau lien, les paquets de données à contrôler étant repris directement de la couche OSI 2 (niveau lien) et
- examen d'en-tête IP, la validité de la structure de chaque paquet IP étant vérifié avant sa transmission au système cible et chaque paquet IP non valide étant rejeté et
- examen du paquet IP par vérification en particulier de la longueur et la somme de test du paquet IP pour constater que les données dans l'entête TCP ou IP concordent avec la structure du paquet IP et
- protection d'empreinte TCP/IP, le transfert de données sortant comme réponse étant neutralisé par les systèmes protégés aux systèmes interrogeant de l'extérieur en utilisant des identificateurs de protocole modèle et
- blocage de tous les paquets UDP pour éviter les attaques sur les systèmes protégés par l'intermédiaire du protocole de réseau UDP en enregistrant et validant de façon ciblée des services nécessaires joignables par UDP, les informations étant autorisées explicitement pour ces port UDP, les autres ports restant cependant fermés et
- limitations de longueur des paquets ICMP, les informations ICMP n'étant reconnues comme paquets de données valables qu'en un longueur maximale prescrite et les paquets ICMP s'en écartant étant rejetés et
- exclusion de certaines adresses IP externes de la communication avec le système cible et
- fonction firewall niveau paquet, les paquets IP entrants et sortants étant examinés par l'intermédiaire de règles librement définissables et sur la base de ces règles, sont refusés ou transmis au système cible et
- protection de services joignables du système cible par exclusion de certains services et utilisateurs et déviation de demandes de service vers d'autres serveurs.

10. Produit de programme informatique mémorisé sur un agent adapté à l'ordinateur présentant des codes de programme informatique de détection et de défense d'attaques sur des systèmes de serveur d'offrants et d'exploitants de services en réseau par le biais d'un appareil électronique (4) à intégrer dans un réseau d'ordinateurs (1) contenant ce produit de programme informatique **caractérisé par** les opérations du procédé
- protection contre les attaques DoS et DDoS (attaques flood),
- chaque IP Syn (demande de mise en oeuvre d'une connexion) étant enregistré et recevant une réponse avec un Syn Ack dans la limitation de temps fixée dans le protocole IP alors que la validité et les services disponibles dans le système cible sont testés le paquet Syn enregistré et
- la mise en oeuvre de la connexion étant initialisé avec le système cible et le paquet de données reçu transmis au système cible pour poursuite de traitement lorsque le contrôle s'est avéré positif et qu'entre-temps l'Ack à envoyer par le système interrogeant de l'extérieur ainsi qu'un paquet de données consécutif valable ont été reçus et
- sécurité niveau lien, les paquets de données à contrôler étant repris directement de la couche OSI 2 (niveau lien) et
- examen d'en-tête IP, la validité de la structure de chaque paquet IP étant vérifié avant sa transmission au système cible et chaque paquet IP non valide étant rejeté et
- examen du paquet IP par vérification en particulier de la longueur et la somme de test du paquet IP pour constater que les données dans l'entête TCP ou IP concordent avec la structure du paquet IP et
- protection d'empreinte TCP/IP, le transfert de données sortant comme réponse étant neutralisé par les systèmes protégés aux systèmes interrogeant de l'extérieur en utilisant des identificateurs de protocole modèle et
- générer le blocage de tous les paquets UDP pour éviter les attaques sur les systèmes protégés par l'intermédiaire du protocole de réseau UDP en enregistrant et validant de façon ciblée des services nécessaires joignables par UDP, les informations étant autorisées explicitement pour ces port UDP, les autres ports restant cependant fermés et
- limitations de longueur des paquets ICMP, les informations ICMP n'étant reconnues comme paquets de données valables qu'en un longueur maximale prescrite et les paquets ICMP s'en écartant étant rejetés et
- exclusion de certaines adresses IP externes de la communication avec le système cible et
- fonction firewall niveau paquet, les paquets IP entrants et sortants étant examinés par l'intermédiaire de règles librement définissables et sur la base de ces règles, sont refusés ou transmis au système cible et
- protection de services joignables du système cible par exclusion de certains services et utilisateurs et déviation de demandes de service vers d'autres serveurs.
